# EUROPEAN PATENT APPLICATION

(11) **EP 4 757 165 A1**
(43) Date of publication of application: **10.06.2026**
(21) Application number: 25195376.6
(22) Date of filing: 12.08.2025
(51) Int. Cl.: H02P 1/46, H02P 3/22, H02P 25/03, H02P 27/06, B63H 21/17

(54) **MOTOR DRIVE DEVICE, BOAT PROPULSION DEVICE, AND BOAT**

(30) Priority: 06.12.2024 JP 2024212978
(71) Applicant: Yamaha Hatsudoki Kabushiki Kaisha, Iwata-shi, Shizuoka 438-8501 (JP)
(72) Inventor: Suetake, Keiichi, Iwata-shi, Shizuoka 438-8501 (JP); Ito, Takahiro, Iwata-shi, Shizuoka 438-8501 (JP); Ohmura, Hajime, Iwata-shi, Shizuoka 438-8501 (JP)
(74) Representative: Grünecker Patent- und Rechtsanwälte PartG mbB

(57) **Abstract**

A boat propulsion device includes an electric motor and a motor drive device that drives the electric motor. The motor drive device includes a power input terminal, a ground terminal connected to a ground line, a drive circuit supplying electric power to the electric motor, an electrical resistive element, and a connection device. The connection device executes a first connection pattern in which the power input terminal is electrically connected to the power line via the electrical resistive element, and a second connection pattern in which the power input terminal is electrically connected to the ground line via the electrical resistive element.

## Description

The technology disclosed herein relates to a motor drive device, a boat propulsion device, and a boat.

Boat propulsion devices using electric motors as a drive source are known. Such a boat propulsion device is equipped with an electric motor and a motor drive device that drives the electric motor. For example, the motor drive device used in electric tools has a drive circuit (e.g., inverter circuit) that supplies electric power to the motor and various electrical resistive elements (shunt resistors, protective resistors) (see, e.g., WO 2018/056045, WO 2019/069919, JP 7226533 B).

There is room for reducing the number of components in conventional boat propulsion devices and motor drive devices.

This document discloses a technology that can solve the above-mentioned problems.

The technology disclosed herein can be implemented as the following aspects.
(1) A boat propulsion device disclosed herein is a boat propulsion device including an electric motor and a motor drive device that drives the electric motor, wherein the motor drive device includes: a drive circuit having a power input terminal and a ground terminal connected to a ground line and supplying electric power to the electric motor; an electrical resistive element; and a connection device that executes a first connection pattern in which the power input terminal is electrically connected to a power line via the electrical resistive element and a second connection pattern in which the power input terminal is electrically connected to the ground line via the electrical resistive element.
   The first connection pattern of the connection device causes the electrical resistive element to function, e.g., as a precharge resistor, and the second connection pattern causes the electrical resistive element to function, e.g., as a discharge resistor. This configuration in which common electrical resistive elements are used for different functions can reduce the number of components in the motor drive device.
(2) In the above boat propulsion device, the connection device may include: a first switch element electrically connected at one end to the power line and electrically connected at the other end to the power input terminal via the electrical resistive element: and a second switch element, electrically connected at one end to the ground line and electrically connected at the other end to the power input terminal via the electrical resistive element. In this configuration, the first switch element and the second switch element can independently turn on and off the first connection pattern and turn on and off the second connection pattern.
(3) In the above boat propulsion device, the motor drive device may further includes a third switch element electrically connected at one end to the power line and electrically connected at the other end to the power input terminal without the electrical resistive element. The third switch element can turn on and off the power supply from the power line to the drive circuit independently of the connection pattern of the connection device.
(4) The above boat propulsion device may further include a controller, wherein the controller may set the connection device to the first connection pattern when it receives an instruction to start driving the electric motor as a necessary condition. In this configuration, the first connection pattern suppresses the generation of inrush current to the electric motor at the start of driving the electric motor.
(5) In the above boat propulsion device, the controller may release the connection of the first connection pattern after a first reference time has elapsed from the time at which the connection device is set to the first connection pattern. In this configuration, releasing the connection by the first connection pattern suppresses power loss in the electrical resistive element.
(6) In the above boat propulsion device, the motor drive device may further includes a third switch element electrically connected at one end to the power line and electrically connected at the other end to the power input terminal without the electrical resistive element, and the controller may set the third switch element from the open state to the closed state after a second reference time has elapsed from the time at which the connection device is set to the first connection pattern. In this configuration, power supply to the electric motor can be continued while suppressing the generation of inrush current to the drive circuit at the start of driving the electric motor.
(7) The above boat propulsion device may further includes a controller, wherein the controller may set the connection device to the second connection pattern when it receives an instruction to stop driving the electric motor as a necessary condition. In this configuration, the second connection pattern discharges the electric charge accumulated in the drive circuit.
(8) In the above boat propulsion device, the controller may release the connection by the second connection pattern after a third reference time has elapsed from the time at which the connection device is set to the second connection pattern. In this configuration, releasing the connection by the second connection pattern suppresses electrical leakage from the drive circuit.
(9) In the above boat propulsion device, the connection device may have a first electrical switch element for setting and releasing the first connection pattern, and the first electrical switch element, the electrical resistive element, and the drive circuit may be mounted on the same circuit board. This configuration can reduce the number of components.
(10) In the above boat propulsion device, the connection device may further includes a second electrical switch element for setting and releasing the second connection pattern, and the second electrical switch element may also be mounted on the circuit board. This configuration can reduce the number of components.
(11) In the above boat propulsion device, the motor drive device may further includes a third switch element electrically connected at one end to the power line and electrically connected at the other end to the power input terminal without the electrical resistive element, and the third switch element may also be mounted on the circuit board. This configuration can reduce the number of components.
(12) A motor drive device disclosed herein is a motor drive device for driving an electric motor, including: a drive circuit having a power input terminal and a ground terminal connected to a ground line and supplying electric power to the electric motor; an electrical resistive element; and a connection device that executes a first connection pattern in which the power input terminal is electrically connected to a power line via the electrical resistive element and a second connection pattern in which the power input terminal is electrically connected to the ground line via the electrical resistive element. According to this motor drive device, the number of components of the boat propulsion device can be reduced because the electrical resistive elements can be shared and used in different functions.

The technology disclosed herein can be implemented in various forms, e.g., in the form of a motor drive device, a boat propulsion device equipped with the motor drive device, a boat control system equipped with the boat propulsion device, and a boat equipped with the boat propulsion device.

According to the technology disclosed herein, the number of components in a boat propulsion device can be reduced because electrical resistive elements can be shared and used in different functions.

### BRIEF DESCRIPTION OF THE DRAWINGS

FIG. 1 is a perspective view schematically illustrating a configuration of an embodiment of a boat.
FIG. 2 is a side view illustrating a configuration of the electric propulsion device.
FIG. 3 is a schematic diagram illustrating a configuration of the drive unit.
FIG. 4 is a block diagram illustrating a configuration of a boat control system in a boat.
FIG. 5 is a block diagram illustrating an internal configuration of the MCU.
FIG. 6 is a flowchart showing the switching control process.
FIG. 7 is a simplified diagram illustrating switching patterns of the connection device.

### DETAILED DESCRIPTION OF THE PREFERRED EMBODIMENTS

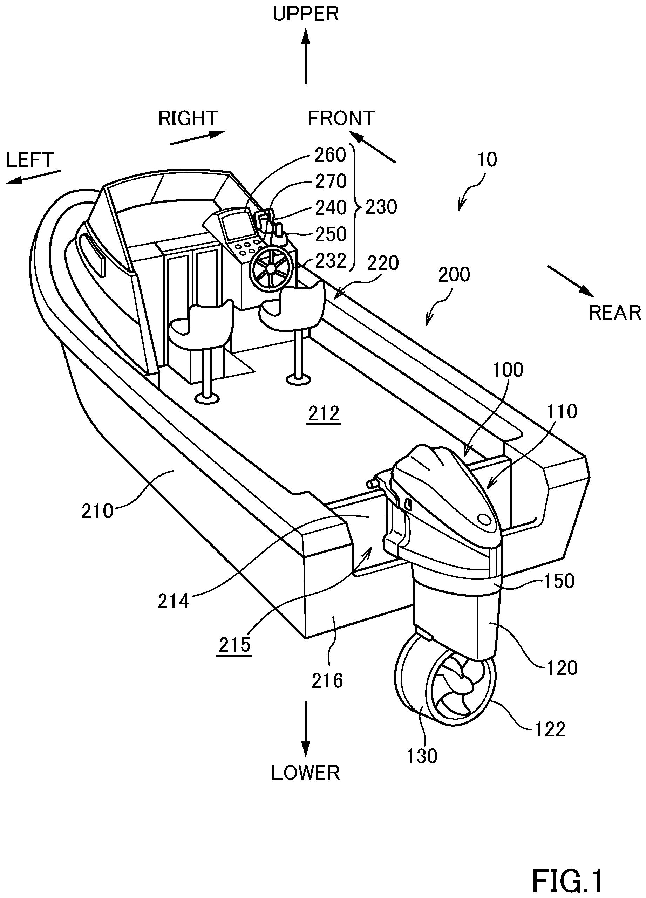

FIG. 1 is a perspective view schematically illustrating a configuration of an embodiment of a boat 10. FIG. 1 and other some drawings described below show arrows representing each direction with respect to the position of the boat 10. More specifically, some figures show arrows representing front (FRONT), rear (REAR), left (LEFT), right (RIGHT), upper (UPPER), and lower (LOWER) directions, respectively. The front-rear direction, left-right direction, and upper-lower direction (vertical direction) are orthogonal to each other.

As shown in FIG. 1, the boat 10 has a boat body 200, and an electric propulsion device 100. The electric propulsion device 100 is an example of the boat propulsion device.

The boat body 200 is a part of the boat 10 for the user (crew) to ride. The boat body 200 includes a boat main body 210, a pilot seat 220, and a steering device 230.

The boat main body 210 includes a living space 212. The pilot seat 220 is installed in the living space 212. The boat body 200 further includes a partition wall 214 and a transom 216. The partition wall 214 divides the rear side of the living space 212. The transom 216 is located at the rear end of the boat body 200. In the front-rear direction, a space 215 exists between the transom 216 and the partition wall 214.

The steering device 230 is a device for steering the boat. The steering device 230 is located near the pilot seat 220. The steering device 230 includes a steering wheel 232, a shift/throttle lever 240, a joystick unit 250, a display device 260, and an input device 270.

The steering wheel 232 is an operation device for steering the boat 10. The shift/throttle lever 240 is an operation device for performing a shifting operation and a propulsion force change operation of the boat 10. The joystick unit 250 is an operation device for performing a steering operation of the boat 10 and a shifting operation and a propulsion force change operation of the boat 10. The display device 260 is, e.g., a liquid crystal display and displays various images (e.g., operation images) related to the boat 10. The input device 270 is, e.g., a button for changing the steering mode and the like. The input device 270 includes a light-emitting diode (LED).

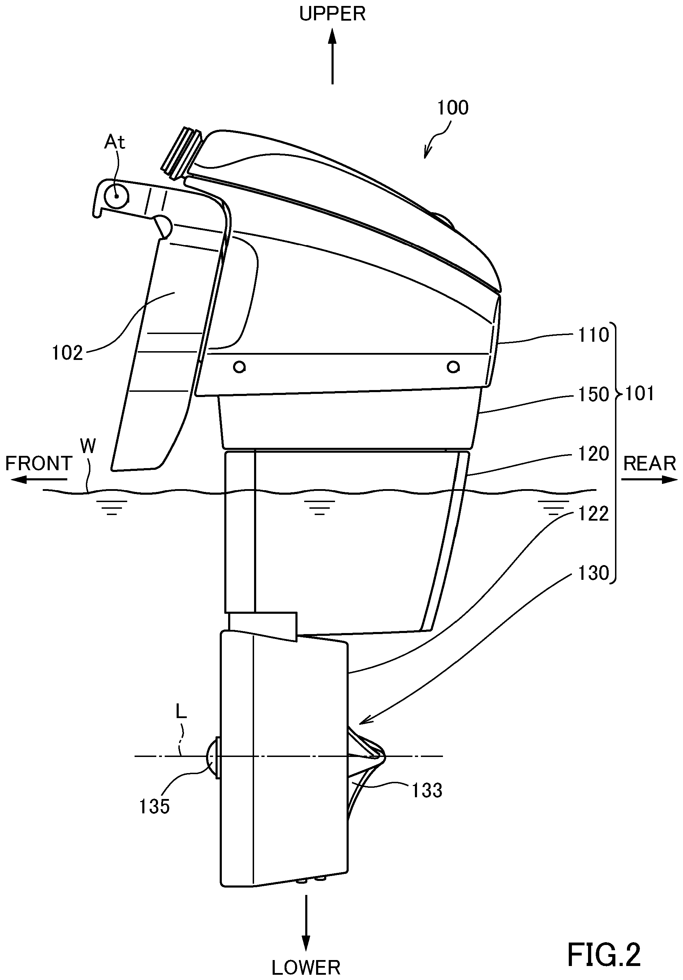

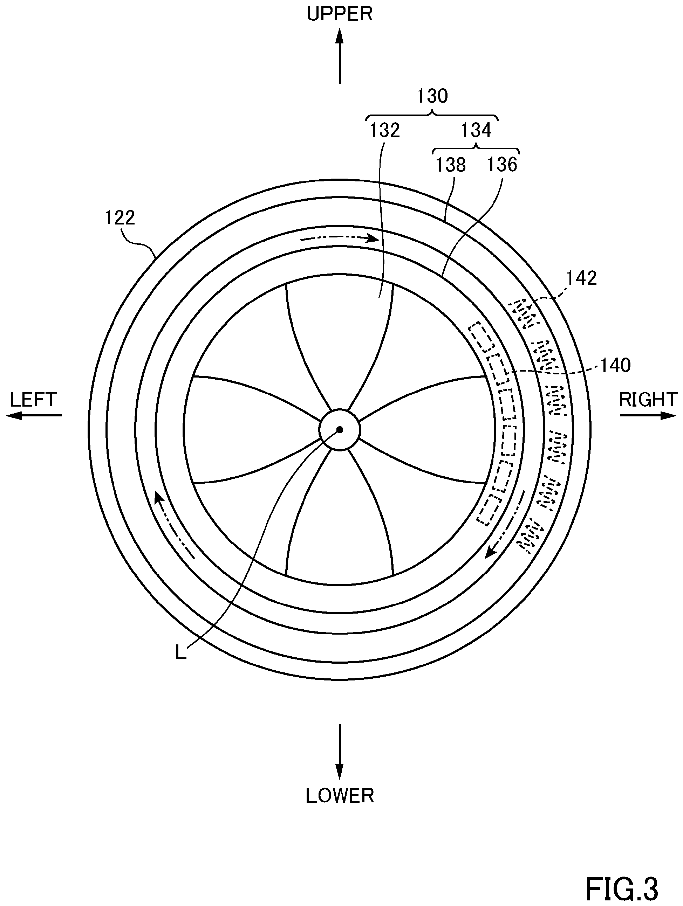

FIG. 2 is a side view schematically illustrating a configuration of an electric propulsion device 100. The electric propulsion device 100 is a device that generates thrust to propel the boat 10. The electric propulsion device 100 is an electric propulsion device driven by an electric motor 134. The electric propulsion device 100 of this embodiment is an outboard motor. In the following, the electric propulsion device 100 in the reference attitude will be described unless otherwise specified. The reference attitude is the attitude of the electric propulsion device 100 when the boat 10 is running (the attitude shown in FIGS. 1 and 3), and is the attitude in which the propeller rotation shaft L of the propeller 132 (described below) extends in the front-rear direction. The front-rear direction, the left-right direction, and the upper-lower direction are defined on the basis of the electric propulsion device 100 in the reference attitude.

The electric propulsion device 100 is attached to the transom 216 disposed at the rear (stern) of the boat body 200 (see FIG. 1). The electric propulsion device 100 has a propulsion device main body 101 and a suspension device 102.

The propulsion device main body 101 has a cowl 110, a middle housing 150, a lower housing 120, a duct 122, and a drive unit 130.

The cowl 110 is located at an upper portion of the electric propulsion device 100. The cowl 110 is a cover that accommodates various wirings and other components.

The middle housing 150 is located below the cowl 110 in electric propulsion device 100. The middle housing 150 is a cover that accommodates the steering device 152, SCU 154, various wirings, and the like, as described below.

The lower housing 120 is located below the middle housing 150 in the electric propulsion device 100. The lower housing 120 is a cover that accommodates the motor control unit (MCU) 139, various wirings, and the like, as described below. The lower housing 120 is rotatably attached to the middle housing 150 around an axis along the upper-lower direction. The lower housing 120 may be positioned lower than the water surface W in the reference attitude (see FIG. 2).

The duct 122 is located below the lower housing 120 in the electric propulsion device 100. The duct 122 is a tubular member extending in the front-rear direction. The duct 122 is positioned lower than the water surface W in the reference attitude (see FIG. 2). The drive unit 130 is located radially inner side of the duct 122. In the radially inner side of the duct 122, a stator fin 133 and a bearing 135 are provided (see FIG. 2). The bearing 135 supports the propeller 132, described below, rotatably about the propeller rotation shaft L. The stator fin 133 has a plurality of fins (e.g., three fins). The plurality of fins are arranged radially around the bearing 135. The plurality of fins are equally spaced around the propeller rotation shaft L. The plurality of fins are fixed to the duct 122. The plurality of fins protrude rearwardly from the duct 122 behind the propeller 132 (see FIGS. 1 and 2).

FIG. 3 is a schematic view illustrating a configuration of the drive unit 130. The drive unit 130 generates thrust to propel the boat 10. The drive unit 130 includes a propeller 132 and an electric motor 134.

The propeller 132 is a rotating member having a plurality of wings. The propeller 132 generates thrust by rotating. The propeller 132 is located radially inner side of the duct 122. The propeller 132 can rotate about the horizontal propeller rotation shaft L. The propeller rotation shaft L is parallel to the central axis of the duct 122. The duct 122 covers the entire circumference of the propeller 132.

The electric motor 134 rotates the propeller 132. The electric motor 134 includes a rotor 136 and a stator 138.

The rotor 136 is a tubular member extending in the front-rear direction. The rotor 136 is rotatably supported with respected to the duct 122. The rotor 136 rotates about the propeller rotation shaftL with respect to the stator 138. The propeller 132 is located radially inner side of the rotor 136. The propeller 132 is fixed to the rotor 136. The propeller 132 rotates together with the rotor 136. The rotor 136 includes a plurality of permanent magnets 140. In FIG. 3, only one of the plurality of permanent magnets 140 is signed, and the signs of the other permanent magnets 140 are omitted. The plurality of permanent magnets 140 are arranged along the circumferential direction of the rotor 136.

The stator 138 is a tubular member extending in the front-rear direction. The stator 138 is disposed on the radially outer side of the rotor 136. The stator 138 is disposed on the same axis as the rotor 136. The stator 138 is fixed to the duct 122. The stator 138 includes a plurality of coils 142. In FIG. 3, only one of the plurality of coils 142 is signed, and the signs of the other coils 142 are omitted. The plurality of coils 142 are arranged along the circumferential direction of the stator 138.

When the plurality of coils 142 are energized, an electromagnetic force is generated to rotate the rotor 136. With this configuration, the propeller 132 generates forward propulsion force when the rotor 136 of the electric motor 134 rotates in the forward rotation direction and rearward propulsion force when the rotor 136 of the electric motor 134 rotates in the reverse rotation direction.

The suspension device 102 is a device for suspending the propulsion device main body 101 on the boat body 200. The suspension device 102 rotates the propulsion device main body 101 about the tilt axis At (see FIG. 2). This achieves the tilting action of rotating the propulsion device main body 101 in the upper-lower direction with respect to the boat body 200.

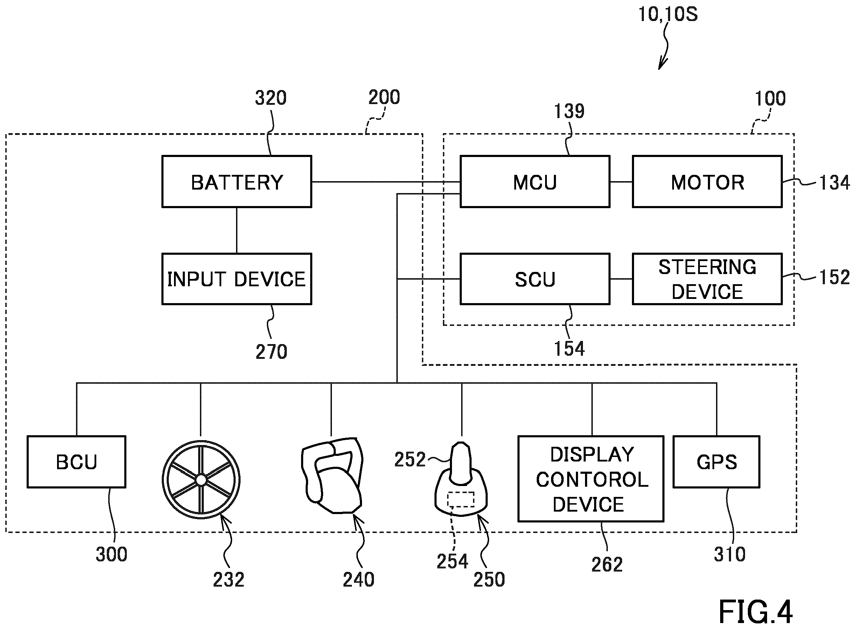

FIG. 4 is a block diagram illustrating an internal configuration of the boat control system 10S in the boat 10. Each component in the boat control system 10S is communicatively connected to each other, e.g., by command line processor (CLP) communication. As shown in FIG. 4, the boat body 200 includes a BCU 300, a GPS 310, a battery 320, and a display control device 262.

The boat control unit (BCU) 300 controls the overall operation of the boat 10 based on, e.g., signals transmitted from each of the components. The BCU 300 includes, e.g., a CPU, a multi-core CPU, and programmable devices (field programmable gate array (FPGA), programmable logic device (PLD), and the like).

The Global Positioning System (GPS) 310 is a device that uses signals received from satellites to determine the current position of the boat 10. The battery 320 is an energy storage device. The battery 320 supplies power to the electric motor 134 (described below) and the input device 270. The display control device 262 controls the display of the display device 260.

The electric propulsion device 100 includes the electric motor 134 described above, the steering device 152, the MCU 139, and the SCU 154.

The steering device 152 is a device that controls the steering angle of the boat 10. The steering device 152 is accommodated in the middle housing 150. The steering device 152 includes, e.g., an electric motor for steering (not shown) and a steering shaft extending in the upper-lower direction (not shown). When the steering angle is changed by the steering device 152, e.g., the electric motor rotates the steering shaft. As the steering shaft rotates, the lower housing 120 connected to the steering shaft and the drive unit 130 connected to the lower housing 120 rotate around an axis along the upper-lower direction. This changes the steering angle of the boat 10.

The motor control unit (MCU) 139 drives the electric motor 134. The MCU 139 is accommodated in the lower housing 120. The MCU 139 is an example of the motor drive device.

The steering control unit (SCU) 154 controls the operation of the steering device 152. The SCU 154 includes, e.g., a CPU, a multi-core CPU, and a programmable device (field programmable gate array (FPGA), programmable logic device (PLD), and the like). The SCU 154 is accommodated in the middle housing 150.

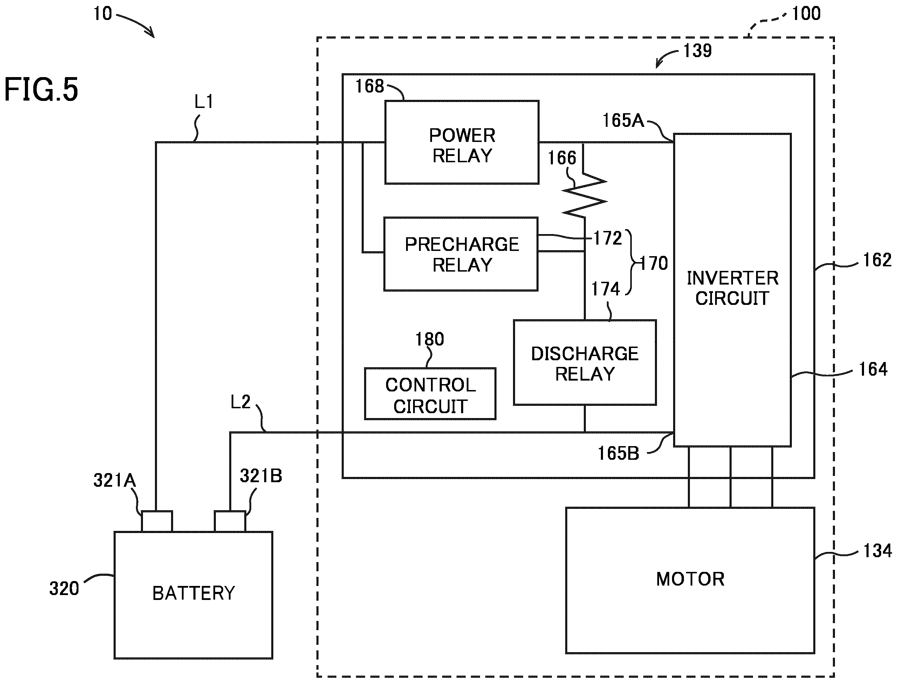

FIG. 5 shows a block diagram of an internal configuration of the MCU 139. The MCU 139 includes a circuit board 162, an inverter circuit 164, an electrical resistive element 166, a power relay 168, a connection device 170, and a control circuit 180. The inverter circuit 164 is an example of the drive circuit, the power relay 168 is an example of the third switch element, and the control circuit 180 is an example of the controller. The inverter circuit 164, the electrical resistive element 166, the power relay 168, the connection device 170, and the control circuit 180 are all mounted on the common circuit board 162.

The inverter circuit 164 is a power circuit that supplies power to the electric motor 134. The electric motor 134 of this embodiment is a three-phase motor, and the inverter circuit 164 is a three-phase modulating inverter circuit. The inverter circuit 164 converts DC power from the battery 320 into three-phase AC power and supplies it to the electric motor 134. The inverter circuit 164 includes a power input terminal 165A and a ground terminal 165B. The power input terminal 165A is electrically connected to the positive terminal 321A of the battery 320 via the power line L1, and the ground terminal 165B is electrically connected to the negative terminal 321B of the battery 320 via the ground line L2.

The power relay 168 is the main switch element that turns the power supply from the battery 320 to the inverter circuit 164 on and off. The input terminal of the power relay 168 is electrically connected to the positive terminal 321A of the battery 320 via the power line L1. The output terminal of the power relay 168 is electrically connected to the power input terminal 165A of the inverter circuit 164 without the electrical resistive element 166. The power relay 168 is, e.g., a field effect transistor (FET). The power relay 168 may be a switch element other than a FET (e.g., bipolar transistor or mechanical switch element).

The connection device 170 includes a precharge relay 172 and a discharge relay 174. The precharge relay 172 is an example of the first switch element and the first electrical switch element, and the discharge relay 174 is an example of the second switch element and the second electrical switch element.

The input terminal of the precharge relay 172 is electrically connected to the positive terminal 321A of the battery 320 via the power line L1. The output terminal of the precharge relay 172 is electrically connected to the power input terminal 165A of the inverter circuit 164 via the electrical resistive element 166. The input terminal of the discharge relay 174 is electrically connected to the negative terminal 321B of the battery 320 via the ground line L2. The output terminal of the discharge relay 174 is electrically connected to the power input terminal 165A of the inverter circuit 164 via the electrical resistive element 166. The precharge relay 172 and the discharge relay 174 are, e.g., field effect transistors (FETs). The precharge relay 172 and the discharge relay 174 may be switch elements other than FETs (e.g., bipolar transistors or mechanical switch elements).

The electrical resistive element 166 is, e.g., an electrical resistor. As described above, the input terminal of the electrical resistive element 166 is electrically connected to the output terminal of the precharge relay 172 and the output terminal of the discharge relay 174. The output terminal of the electrical resistive element 166 is electrically connected to the power input terminal 165A of the inverter circuit 164. The electrical resistive element 166 is not limited to electrical resistor, but can be any electrical element having a resistive component. The electrical resistive element 166 may also be a variable resistive element.

The control circuit 180 controls various elements mounted on the circuit board 162. The control circuit 180 includes, e.g., a CPU, a multi-core CPU, and programmable devices (field programmable gate array (FPGA), programmable logic device (PLD), and the like).

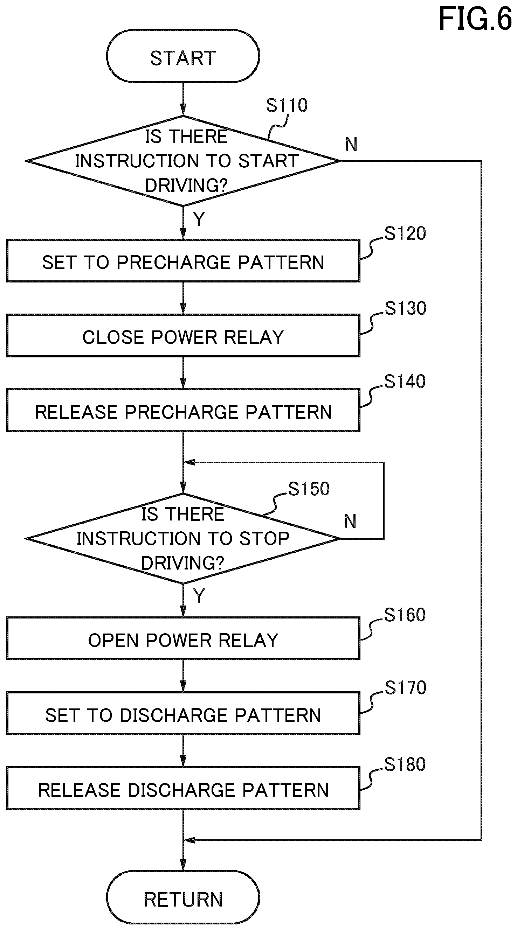

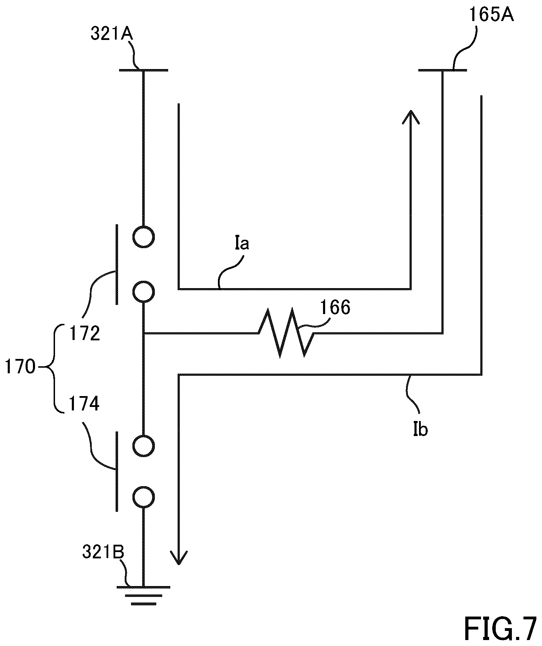

FIG. 6 shows a flowchart showing the switching control process, and FIG. 7 is a simplified diagram illustrating switching patterns of the connection device 170. For example, when the user performs an operation to activate the boat control system 10S using the steering device 230, the battery 320 supplies power to each component of the boat control system 10S (e.g., the control circuit 180 of the MCU 139, and the like). The control circuit 180 executes the switching control process shown in FIG. 6. The switching control process is used to control the switching of the power relay 168, the precharge relay 172, and the discharge relay 174, respectively.

Specifically, the control circuit 180 determines whether there is an instruction to start driving the electric motor 134 (S110). For example, when the user operates the shift/throttle lever 240 or the joystick unit 250 to instruct the start the driving of the electric motor 134, the BCU 300 sends a drive start signal to the control circuit 180. The control circuit 180 determines whether an instruction to start driving is received based on whether the drive start signal is received.

Here, it is assumed that in the initial state before the control circuit 180 receives the drive start signal, the power relay 168, the precharge relay 172, and the discharge relay 174 are all open. In other words, the power input terminal 165A of the inverter circuit 164 is not electrically connected to either the positive terminal 321A or the negative terminal 321B of the battery 320.

If the control circuit 180 determines that there is no instruction to start driving (S110: NO), it maintains the above initial state. If the control circuit 180 determines that there is an instruction to start driving (S110: YES), it sets the connection device 170 to a precharge pattern (S120). The precharge pattern is an example of the first connection pattern.

The precharge pattern is a pattern in which the precharge relay 172 is closed and the discharge relay 174 is open. In other words, in the precharge pattern, the power input terminal 165A of the inverter circuit 164 is electrically connected to the positive terminal 321A of the battery 320 via the electrical resistive element 166. At this time, the power relay 168 remains open. Therefore, the current Ia from the positive terminal 321A flows through the precharge relay 172 and the electrical resistive element 166 to the power input terminal 165A of the inverter circuit 164 (see FIG. 7). Therefore, the electrical resistive element 166 functions as a precharge resistor. In other words, the electrical resistive element 166 suppresses the inrush current from the battery 320 to the inverter circuit 164 and protects the circuit elements (capacitors, switch elements, and the like) constituting the inverter circuit 164.

The control circuit 180 sets the power relay 168 from the open state to the closed state (S130) after a second reference time has elapsed from the time at which the connection device 170 is set to the precharge pattern. Thus, this embodiment allows the power supply to the electric motor 134 to continue while suppressing the generation of inrush current to the inverter circuit 164 at the start the driving of the electric motor 134. The second reference time is, e.g., a time sufficient to reduce the generation of inrush current to the inverter circuit 164 from the time at which the precharge pattern is set.

After setting the power relay 168 to the closed state, the control circuit 180 releases the precharge pattern (S140). In this embodiment, a time longer than the above second reference time is an example of the first reference time. Releasing the connection by the precharge pattern suppresses power loss in the electrical resistive element 166.

After the release of the precharge pattern, the control circuit 180 determines whether there is an instruction to stop driving the electric motor 134 (S150). For example, when the user operates the shift/throttle lever 240 or the joystick unit 250 to instruct the drive stop of the electric motor 134, the BCU 300 sends a drive stop signal to the control circuit 180. The control circuit 180 determines whether instruction to stop driving is received based on whether the drive stop signal is received.

If the control circuit 180 determines that there is no drive stop instruction (S150: NO), it maintains the power supply state in which only the power relay 168 is closed. If the control circuit 180 determines that there is an instruction to stop driving (S150: YES), it changes the power relay 168 from the closed state to the open state (S160). As a result, the MCU 139 enters the power stop state in which the power supply to the electric motor 134 is stopped.

After setting the power relay 168 to the open state, the control circuit 180 sets the connection device 170 to a discharge pattern (S170). The discharge pattern is an example of the second connection pattern.

The discharge pattern is a pattern in which the precharge relay 172 is in the open state and the discharge relay 174 is in the closed state. In other words, in the discharge pattern, the power input terminal 165A of the inverter circuit 164 is electrically connected to the negative terminal 321B of the battery 320 via the electrical resistive element 166. After the power relay 168 and the precharge relay 172 are changed from the closed state to the open state, an electric charge is accumulated in the internal circuitry of the inverter circuit 164 (especially in the capacitor). However, due to the setting of the discharge pattern, current Ib flows from the power input terminal 165A of the inverter circuit 164 through the electrical resistive element 166 and the discharge relay 174 to the ground line L2 (see FIG. 7). Therefore, the electrical resistive element 166 functions as a discharge resistor. In other words, the electrical resistive element 166 discharges the charge stored in the inverter circuit 164.

After the third reference time elapses from the time at which the connection device 170 is set to the discharge pattern, the control circuit 180 releases the connection by the discharge pattern (S180) and terminates this switching control process. The release of the discharge pattern suppresses electrical leakage from the inverter circuit 164. The third reference time is, e.g., a time sufficient to discharge the charge accumulated in the inverter circuit 164 from the time point of setting the discharge pattern.

### MODIFICATIONS

The technology disclosed herein is not limited to the embodiments described above, but can be modified into various forms to the extent not departing from the gist of the invention, for example, the following modifications are possible.

The configuration of the boat 10, the boat control system 10S, and the electric propulsion device 100 in the above embodiment is only an example and can be modified in various ways. For example, in the above embodiment, the boat propulsion device is exemplified by the electric propulsion device 100 that is an outboard motor, but the boat propulsion device may be, e.g., an inboard motor, an inboard/outboard motor, a jet propeller. The electric motor may be a multiphase motor other than a three-phase motor, or a direct current motor.

In the above embodiment, the electric propulsion device 100 has only the electric motor as a drive source, but the boat propulsion device may be a hybrid type having an engine in addition to the electric motor.

In the above embodiment, the drive circuit is not limited to the inverter circuit 164, but may be any other power circuit or the like. The first switch element, the second switch element, and the third switch element are not limited to an electrical type, but may be a mechanical type. In the above embodiment, at least one of the power relay 168, the precharge relay 172, and the discharge relay 174 may not be located on the circuit board 162, but may be located on another circuit board or the like.

In the above embodiment, the connection device 170 has a configuration with the two switch elements 172, 174, but it may turn the connection patterns on and off by a single switch element. However, with the configuration of the above embodiment, the first connection pattern can be turned on and off and the second connection pattern can be turned on and off independently.

In the switching control process shown in FIG. 6, the control circuit 180 may not perform at least one of S130, S140, S170, and S180.

## Claims

1. A motor drive device (139) for driving an electric motor (134), comprising:
a drive circuit (164) having a power input terminal (165A) and a ground terminal (165B) connected to a ground line (L2) and supplying electric power to the electric motor (134);
an electrical resistive element (166); and
a connection device (170) that executes a first connection pattern in which the power input terminal (165A) is electrically connected to a power line (L1) via the electrical resistive element (166) and a second connection pattern in which the power input terminal (165A) is electrically connected to the ground line (L2) via the electrical resistive element (166).

2. A boat propulsion device (100), comprising:
the electric motor (134); and
the motor drive device (139) according to claim 1.

3. The boat propulsion device (100) according to claim 2, wherein
the connection device (170) comprises:
a first switch element (172) electrically connected at one end to the power line (L1) and electrically connected at the other end to the power input terminal (165A) via the electrical resistive element (166): and
a second switch element (174), electrically connected at one end to the ground line (L2) and electrically connected at the other end to the power input terminal (165A) via the electrical resistive element (166).

4. The boat propulsion device(100) according to claim 2 or claim 3, wherein
the motor drive device (139) further comprises a third switch element (168) electrically connected at one end to the power line (L1) and electrically connected at the other end to the power input terminal (165A) without the electrical resistive element (166).

5. The boat propulsion device (100) according to claim 4, wherein
the controller (180) sets the third switch element (168) from the open state to the closed state after a second reference time has elapsed from the time at which the connection device (170) is set to the first connection pattern.

6. The boat propulsion device (100) according to any of claims 2 to 5, further comprising:
a controller (180), wherein
the controller (180) sets the connection device (170) to a connection pattern.

7. The boat propulsion device (100) according to claim 6, wherein the controller (180) sets the connection device (170) to the first connection pattern when it receives an instruction to start driving the electric motor (134) as a necessary condition.

8. The boat propulsion device (100) according to claim 7, wherein
the controller (180) releases the connection by the first connection pattern after a first reference time has elapsed from the time at which the connection device (170) is set to the first connection pattern.

9. The boat propulsion device (100) according to any one of claims 6 to 8, wherein the controller (180) sets the connection device (170) to the second connection pattern when it receives an instruction to stop driving the electric motor (134) as a necessary condition.

10. The boat propulsion device (100) according to claim 9, wherein
the controller (180) releases the connection by the second connection pattern after a third reference time has elapsed from the time at which the connection device (170) is set to the second connection pattern.

11. The boat propulsion device (100) according to any one of claims 2 to 10, wherein
the connection device (170) comprises a first electrical switch element (172) for setting and releasing the first connection pattern, and
the first electrical switch element (172), the electrical resistive element (166), and the drive circuit (164) are mounted on the same circuit board (162).

12. The boat propulsion device (100) according to claim **11,** wherein
the connection device (170) further comprises a second electrical switch element (174) for setting and releasing the second connection pattern, and
the second electrical switch element (174) is also mounted on the circuit board (162).

13. The boat propulsion device (100) according to claim 4 and to any of claim 11 or claim 12, wherein
the third switch element (168) is also mounted on the circuit board (162).

14. A boat (10), comprising:
a boat body (200); and
the boat propulsion device (100) according to any one of claims 2 to 13, which is mounted on the boat body (200).
